# EUROPÄISCHE PATENTSCHRIFT

(11) **EP 3 548 359 B1**
(45) Veröffentlichungstag und Bekanntmachung des Hinweises auf die Patenterteilung: **14.04.2021**
(21) Anmeldenummer: 17787175.3
(22) Anmeldetag: 20.10.2017
(51) Int. Cl.: B62D 1/04, B62D 1/06, B62D 1/08

(54) **LENKRAD FÜR EIN KRAFTFAHRZEUG**
STEERING WHEEL FOR A VEHICLE
VOLANT POUR VOITURE

(30) Priorität: 30.11.2016 DE 102016123177; 30.11.2016 DE 102016123134
(43) Veröffentlichungstag der Anmeldung: 09.10.2019
(73) Patentinhaber: Dalphi Metal España, S.A., 36213 Vigo (ES)
(72) Erfinder: BAÑA CASTRO, Ramon, 36208 Vigo (ES); PEREIRO COTO, Pedro, 36400 O Porrino (ES); MOURE FERNÁNDEZ, Marcelino, 36350 Nigrán (ES)
(74) Vertreter: ZF Patentabteilung - DIPS
(86) Internationale Anmeldenummer: PCT/EP2017/076809
(87) Internationale Veröffentlichungsnummer: WO 2018/099651

(56) Entgegenhaltungen:
- WO-A1-2016/014692
- WO-A1-2016/172709
- WO-A2-2005/023591
- DE-A1-102015 006 543

## Beschreibung

Die Erfindung betrifft ein Lenkrad für ein Kraftfahrzeug.

Fahrzeuglenkräder weisen im Allgemeinen eine Nabe und einen Lenkradkranz auf, der durch eine Speiche mit der Nabe verbunden ist. Es sind zahlreiche Lenkradformen bekannt, welche sich beispielsweise durch die Art und Anzahl der Speichen zwischen Nabe und Lenkradkranz unterscheiden.

Die WO 2005/023591 A2 offenbart nach dem Oberbegriff des Anspruchs 1, ein Fahrzeuglenkrad mit einer Lenkradachse, einer Nabe zur Befestigung des Lenkrads an einer um die Lenkradachse drehbaren Lenkwelle, sowie einem Lenkradkranz, der ein Lenkradskelett sowie eine Skelettabdeckung aufweist, durch mehrere Speichen mit der Nabe verbunden ist und die Nabe in Umfangsrichtung umgibt, wobei das Lenkradskelett teilweise von einer Umschäumung umschlossen ist und an einem Schaumrand aus der Umschäumung herausragt, wobei die Umschäumung im Bereich des Schaumrands an einen Skelettvorsprung des Lenkradskeletts und einen Abdeckungsvorsprung der Skelettabdeckung angrenzt. Die Skelettabdeckung hat eine gebogene Schalenform und wird im Kranzbereich formschlüssig und/oder reibschlüssig mit dem Lenkradskelett verbunden, insbesondere mit dem Lenkradskelett verrastet.

Zur komfortablen Einstellung spezieller Fahrzeugeinrichtungen wie Telefonanlage, Radio, Bordcomputer oder Ähnlichem sind im Stand der Technik auch bereits Lenkräder beschrieben, die etwa im Bereich der Speichen entsprechende Schalterelemente oder sonstige Bedieneinheiten aufweisen.

Moderne Fahrzeuglenkräder umfassen in der Regel neben diesen Bedieneinheiten auch Lenkradverkleidungsteile sowie ein Lenkradskelett, das teilweise mit einem Kunststoffmaterial umschäumt ist, wobei sich das Lenkradskelett zum Beispiel im Bereich der Bedieneinheiten und/oder der Lenkradverkleidungsteile aus der Umschäumung heraus erstreckt. Bei der Skelettumschäumung ist an solchen Schaumrändern die zuverlässige Abdichtung zwischen einer Schäumform und dem Lenkradskelett verfahrenstechnisch aufwendig und teuer. Besonders schwierig gestaltet sich die Abdichtung, wenn im Bereich des Schaumrands Leitungen, etwa zur Datenweitergabe und/oder Stromversorgung einer Bedieneinheit verlaufen.

Aufgabe der Erfindung ist daher die Schaffung eines Lenkrads, bei dem sich ein umschäumtes Lenkradskelett aus der Umschäumung hinaus erstreckt, wobei die Lenkradkonstruktion eine fertigungstechnisch besonders einfache Herstellung ermöglicht.

Erfindungsgemäß wird diese Aufgabe gelöst durch ein Lenkrad für ein Kraftfahrzeug, mit einer Lenkradachse, einer Nabe zur Befestigung des Lenkrads an einer um die Lenkradachse drehbaren Lenkwelle, sowie einem Lenkradkranz, der ein Lenkradskelett sowie eine Skelettabdeckung aufweist, durch eine Speiche mit der Nabe verbunden ist und die Nabe in Umfangsrichtung zumindest teilweise umgibt, wobei das Lenkradskelett und die Skelettabdeckung teilweise von einer Umschäumung umschlossen sind und an einem Schaumrand aus der Umschäumung herausragen, wobei die Umschäumung im Bereich des Schaumrands an einen Skelettvorsprung des Lenkradskeletts und einen Abdeckungsvorsprung der Skelettabdeckung angrenzt, wobei der Skelettvorsprung und der Abdeckungsvorsprung unmittelbar aneinander angrenzen und zusammen einen im Wesentlichen geschlossen umlaufenden Wandvorsprung zur Anlage an einer Schäumform bilden. Die Skelettabdeckung deckt in diesem Fall schwierig abzudichtende, insbesondere konkav geformte Bereiche des Lenkradskeletts ab, und der durch das Lenkradskelett und die Skelettabdeckung gebildete, umlaufende Wandvorsprung gewährleistet einen einfachen, zuverlässigen und dichten Kontakt mit der Schäumform, wodurch insgesamt eine problemlose Umschäumung mit geringem Aufwand möglich ist.

Vorzugsweise bilden das Lenkradskelett und die Skelettabdeckung im Bereich der Umschäumung zumindest abschnittsweise Kanalwände eines im Inneren weitgehend schaumfreien Leitungskanals aus, wobei der Skelettvorsprung und der Abdeckungsvorsprung auf einer Außenseite der Kanalwände angeordnet sind, den Leitungskanal umschließen und sich quer, insbesondere im Wesentlichen senkrecht zu einer Kanalachse des Leitungskanals erstrecken. Ein von dem Lenkradskelett und der Skelettabdeckung abgewandter freier Rand des Skelett- bzw. Abdeckungsvorsprungs ist insbesondere scharfkantig ausgeführt, sodass der Rand beim Schließen der Schäumform in eine Dichtung der Schäumform eingreift und für eine besonders zuverlässige Abdichtung sorgt. Bevorzugt weist der freie Rand mit Bezug auf die Kanalachse keine radialen Sprünge auf, sondern verläuft in Umfangsrichtung stetig, insbesondere sogar abschnittsweise geradlinig. Dies trägt bei besonders einfacher Geometrie der Schäumform wiederum zu einer besonders zuverlässigen Abdichtung zwischen Wandvorsprung und Schäumform bei.

In einer Ausführungsform des Lenkrads ist am Lenkradkranz ein Montagearm zur Befestigung einer Bedieneinheit ausgebildet, wobei sich der Montagearm vom Lenkradkranz zu einem freien Ende hin erstreckt und der Wandvorsprung den Montagearm zwischen dem Lenkradkranz und dem freien Ende umschließt. Bezogen auf eine Tangentialrichtung in seinem Ausgangspunkt am Lenkradkranz erstreckt sich der Montagearm bevorzugt in einem Winkel von wenigstens 30° und maximal 90° zur Tangentialrichtung, besonders bevorzugt in radialer Richtung, also in einem Winkel von 90° zur Tangentialrichtung. Der Montagearm kann sich dabei einwärts oder auswärts, also in Richtung zur Nabe oder von der Nabe weg erstrecken. Die Bedieneinheit ist insbesondere eine (Multifunktions-)Schalterbau-gruppe für das Lenkrad, die ein Kopplungselement sowie einen Positionierabschnitt aufweist und auf den Montagearm des Lenkrads aufsteckbar sowie formschlüssig mit dem Montagearm koppelbar ist. Vorzugsweise ist die Bedieneinheit vom freien Ende des Montagearm in Richtung zum Lenkradkranz aufsteckbar. Das Kopplungselement der Bedieneinheit ist bevorzugt als Rastelement, insbesondere als elastische Rastfeder ausgeführt.

In dieser Ausführungsform des Lenkrads kann im Bereich des Montagearms ein Schaumrand vorgesehen sein, wobei das freie Ende des Montagearms aus der Umschäumung herausragt.

Ferner kann die Skelettabdeckung einen einstückig angeformten Abdeckungsfortsatz aufweisen, welcher zumindest teilweise den Montagearm bildet, wobei der Abdeckungsvorsprung einstückig am Abdeckungsfortsatz angeformt ist. An einem freien Ende des Abdeckungsfortsatzes ist insbesondere ein Steckverbinder ausgebildet, in welchem eine Leitung zur Datenweitergabe und/oder Stromversorgung der Bedieneinheit endet. Dieser Steckverbinder ist bevorzugt komplementär zu einem Steckverbinder der Bedieneinheit ausgebildet.

Gemäß einer weiteren Ausführungsform des Lenkrads umschließt der Wandvorsprung die Speiche zwischen der Nabe und dem Lenkradkranz.

Ferner kann im Bereich der Speiche ein Schaumrand vorgesehen sein, wobei die Speiche nabenseitig aus der Umschäumung herausragt.

Das Lenkradskelett des Lenkrads ist bevorzugt aus einem Metall oder einer Metalllegierung hergestellt, wohingegen die Skelettabdeckung vorzugsweise eine Kunststoff-Abdeckung ist. Die Abdichtung zur Schäumform wird in diesem Fall also realisiert durch das Zusammenspiel einer Metall- und einer Kunststoffkomponente, welche gemeinsam den umlaufenden Wandvorsprung bilden.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine Draufsicht auf ein erfindungsgemäßes Lenkrad;
- Figur 2 eine Rückansicht des Lenkrads aus Figur 1;
- Figur 3 eine separate Ansicht einer Skelettabdeckung des Lenkrads gemäß den Figuren 1 und 2;
- Figur 4 die Rückansicht des Lenkrads gemäß Figur 2 mit aufgebrachter Umschäumung;
- Figur 5 ein schematisches Schnittdetail V-V des Lenkrads gemäß Figur 4; und
- Figur 6 einen Ausschnitt einer perspektivischen Rückansicht eines Lenkradskeletts des Lenkrads gemäß Figur 2.

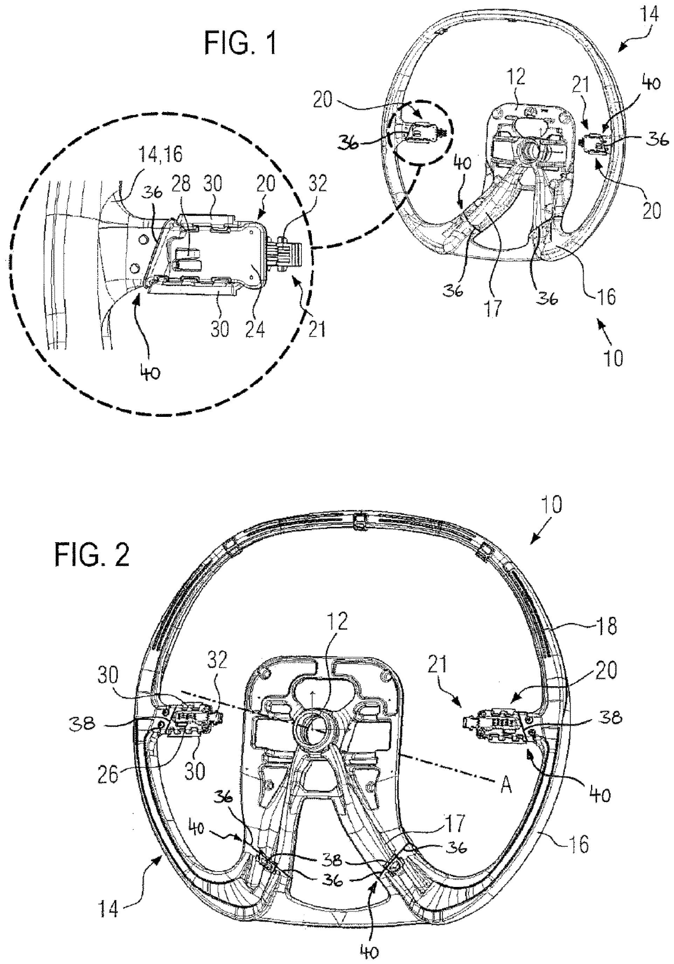

Die Figuren 1 und 2 zeigen Ansichten eines Lenkrads 10 für ein Kraftfahrzeug, mit einer Lenkradachse A, einer Nabe 12 zur Befestigung des Lenkrads 10 an einer um die Lenkradachse A drehbaren Lenkwelle sowie einem Lenkradkranz 14, der durch eine Speiche 17 mit der Nabe 12 verbunden ist und die Nabe 12 in Umfangsrichtung zumindest teilweise umgibt.

Ferner ist ein Lenkradskelett 16 als tragende Komponente des Lenkrads 10 vorgesehen, wobei die Nabe 12, der Lenkradkranz 14 sowie eine oder mehrere Speichen 17 des Lenkrads 10 Abschnitte des Lenkradskeletts 16 umfassen. Das Lenkradskelett 16 ist gemäß Figur 1 ein einstückiges Metallteil, beispielsweise ein Spritzgussteil aus einer Magnesiumlegierung oder Aluminiumlegierung, kann aber alternativ auch aus mehreren Skelettkomponenten zusammengesetzt sein.

Anhand der Figur 2 wird deutlich, dass das Lenkrad 10, insbesondere der Lenkradkranz 14, auf einer Rückseite des Lenkradskeletts 16 eine Skelettabdeckung 18 aufweist, die am Lenkradskelett 16 befestigt ist. Als Rückseite wird in diesem Zusammenhang diejenige Seite bezeichnet, welche im eingebauten Zustand des Lenkrads 10 einer Armaturentafel des Fahrzeugs zugewandt ist. Die Skelettabdeckung 18 ist insbesondere ein Kunststoffteil, das zum Beispiel mit dem Lenkradskelett 16 einen Leitungskanal 19 zur Führung elektrischer Leitungen 34 ausbildet.

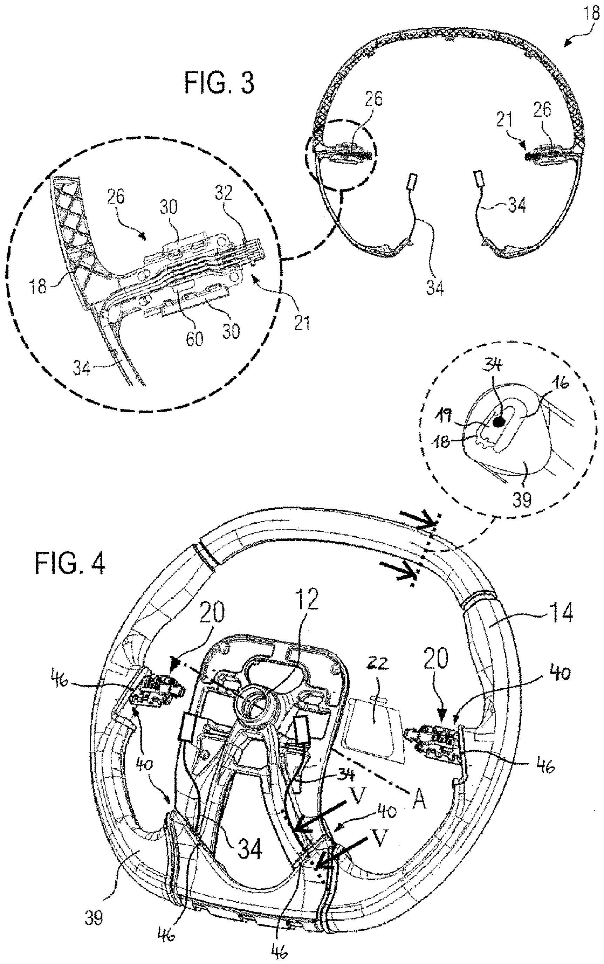

Am Lenkradkranz 14 sind zwei Montagearme 20 zur Befestigung einer Bedieneinheit 22 (siehe Figur 4) ausgebildet, wobei sich die Montagearme 20 jeweils ausgehend vom Lenkradkranz 14 zu einem freien Ende 21 hin erstrecken.

Insbesondere erstrecken sich die Montagearme 20 in einer Ebene oder parallel zu einer Ebene, die vom Lenkradkranz 14 aufgespannt wird und im Wesentlichen senkrecht zur Lenkradachse A verläuft.

Im vorliegenden Ausführungsbeispiel ragen die Montagearme 20 ausgehend vom Lenkradkranz 14 nach innen, das heißt in Richtung zur Nabe 12.

Selbstverständlich sind auch Ausführungsvarianten denkbar, bei denen die Montagearme 20 nach außen, das heißt von der Nabe 12 weg ragen oder sich schräg zu der vom Lenkradkranz 14 aufgespannten Ebene erstrecken.

Gemäß den Figuren 1 und 2 wird jeder Montagearm 20 durch einen einstückig am Lenkradskelett 16 angeformten Skelettfortsatz 24 sowie einen einstückig an der Skelettabdeckung 18 angeformten Abdeckungsfortsatz 26 gebildet.

Insbesondere anhand des Detailausschnitts zu Figur 1 wird deutlich, dass der Montagearm 20 ein Kopplungselement 28 zur lösbaren Befestigung der Bedieneinheit 22 sowie einen Positionierabschnitt 30 zur Lagefestlegung der Bedieneinheit 22 aufweist. Das Kopplungselement 28 ist im vorliegenden Fall ein Rastelement zur Verrastung der Bedieneinheit 22 am Lenkradkranz 14, wobei alternativ auch denkbar wäre, dass das Kopplungselement 28 ein Schraubgewinde oder eine Schraube zur Befestigung der Bedieneinheit 22 am Lenkradkranz 14 ist. Das Kopplungselement 28 sorgt in jedem Fall für eine sichere sowie robuste Verbindung und verhindert ein ungewolltes Lösen der Bedieneinheit 22 vom Lenkradkranz 14. Der Positionierabschnitt 30 dient hingegen einer exakten Ausrichtung der Bedieneinheit 22 und trägt hauptsächlich quer zu einer Montage- bzw. Demontagerichtung zu einer weitgehend spielfreien Lagerung der Bedieneinheit 22 bei. Dementsprechend ist der Positionierabschnitt 30 insbesondere ein Führungsabschnitt, der zusammen mit einem Führungsabschnitt der Bedieneinheit 22 eine Montageführung bildet.

Im dargestellten Ausführungsbeispiel ist das Kopplungselement 28 als starre Rastnase am Skelettfortsatz 24 des Lenkradskeletts 16 angeformt, wohingegen der Positionierabschnitt 30 in Form zweier paralleler Führungsschienen am Abdeckungsfortsatz 26 der Skelettabdeckung 18 angeformt ist.

Abgesehen vom Kopplungselement 28 und dem Positionierabschnitt 30 weist der Montagearm 20 an seinem freien Ende 21 einen Steckverbinder 32 auf, in welchem eine elektrische Leitung 34 zur Datenweitergabe und/oder Stromversorgung der Bedieneinheit 22 endet. Dieser Steckverbinder 32 ist dementsprechend komplementär zu einem Steckverbinder der Bedieneinheit 22 ausgeführt.

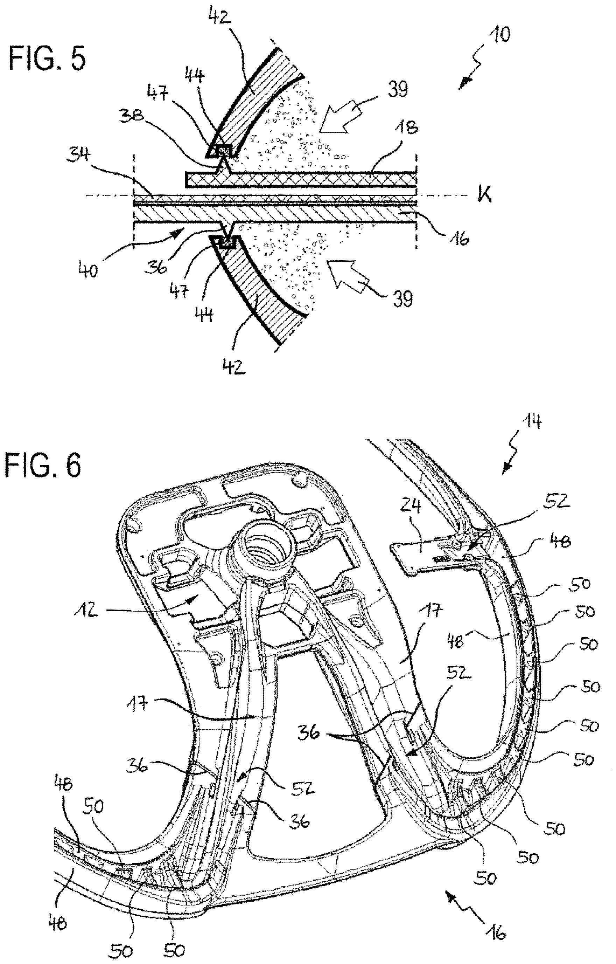

Ferner weisen das Lenkradskelett 16 einen langgestreckten Skelettvorsprung 36 und die Skelettabdeckung 18 einen zugeordneten, langgestreckten Abdeckungsvorsprung 38 auf. Der Skelettvorsprung 36 und der Abdeckungsvorsprung 38 grenzen dabei unmittelbar aneinander an und bilden gemeinsam einen im Wesentlichen geschlossen umlaufenden Wandvorsprung 40 zur Anlage einer Schäumform 42 (siehe Figur 5).

Das Lenkrad 10 umfasst bevorzugt mehrere separate Wandvorsprünge 40, wobei im vorliegenden Ausführungsbeispiel insgesamt vier Wandvorsprünge 40 vorhanden sind. Die Skelettvorsprünge 36 sind dabei jeweils einstückig an das Lenkradskelett 16 angeformt, während die Abdeckungsvorsprünge 38 jeweils einstückig mit der Skelettabdeckung 18 ausgeführt sind.

Anhand der Figuren 1 und 2 wird deutlich, dass an jedem Montagearm 20 des Lenkrads 10 ein Wandvorsprung 40 vorgesehen ist, wobei der langgestreckte Wandvorsprung 40 den Montagearm 20 zwischen dem Lenkradkranz 14 und dem freien Ende 21 des Montagearms 20 umschließt.

Ferner ist gemäß den Figuren 1 und 2 auch an jeder Speiche 17 des Lenkrads 10 ein Wandvorsprung 40 vorgesehen, wobei der Wandvorsprung 40 die Speiche 17 zwischen der Nabe 12 und dem Lenkradkranz 14 umschließt.

Diese jeweils aus einem Skelettvorsprung 36 und einem Abdeckungsvorsprung 38 zusammengesetzten, im Wesentlichen geschlossen umlaufenden Wandvorsprünge 40 liegen gemäß Figur 5 beim Umschäumen des Lenkradskeletts 16 und der Skelettabdeckung 18 an der Schäumform 42 an und bilden eine Abdichtung für das Schäummaterial.

Die Figur 3 zeigt eine Draufsicht auf eine dem Lenkradskelett 16 zugewandte Seite der Skelettabdeckung 18. Zusammen mit dem in Figur 4 dargestellten Schnittdetail des Lenkradkranzes 14 wird deutlich, dass das Lenkrad 10 eine elektrische Leitung 34 zur Datenweitergabe und/oder Stromversorgung der Bedieneinheit 22 aufweist, wobei die Skelettabdeckung 18 in ihrem am Lenkradskelett 16 montierten Zustand zusammen mit dem Lenkradskelett 16 einen geschützten Leitungskanal 19 ausbildet, in welchem die Leitung 34 verläuft.

Der Steckverbinder 32 ist hier konkret an einem freien Ende des Abdeckungsfortsatzes 26 angeformt, in welchem die elektrische Leitung 34 zur Datenweitergabe und/oder Stromversorgung der Bedieneinheit 22 endet.

Analog zu Figur 2 zeigt die Figur 4 eine Rückansicht des Lenkrads 10, wobei das Lenkradskelett 16 und die Skelettabdeckung 18 teilweise von einer Umschäumung 39, das heißt einem flexiblen Schäummaterial aus Kunststoff umschlossen sind und an Schaumrändern 46 aus der Umschäumung 39 herausragen.

Dabei grenzt die Umschäumung 39 im Bereich der Schaumränder 46 jeweils an einen Skelettvorsprung 36 des Lenkradskeletts 16 und einen Abdeckungsvorsprung 38 der Skelettabdeckung 18 an.

Konkret ist im Bereich des Montagearms 20 ein Schaumrand 46 vorgesehen, wobei das freie Ende 21 des Montagearms 20 aus der Umschäumung 39 herausragt. Außerdem ist im Bereich der Speiche 17 ein Schaumrand 46 vorgesehen, wobei die Speiche 17 nabenseitig aus der Umschäumung 39 herausragt.

Abgesehen von der Umschäumung 39 kann der Lenkradkranz 14 optional auch noch eine integrierte Lenkradheizung sowie eine Holz- oder Lederverkleidung aufweisen.

Die Figur 5 zeigt einen schematischen Detailschnitt V-V des Lenkrads 10 aus Figur 4 beim Aufbringen der Umschäumung 39.

Das Lenkradskelett 16 und die Skelettabdeckung 18 bilden dabei im Bereich der Umschäumung 39 zumindest abschnittsweise Kanalwände eines im Inneren weitgehend schaumfreien Leitungskanals 19, wobei der Skelettvorsprung 36 und der Abdeckungsvorsprung 38 auf einer Außenseite der Kanalwände angeordnet sind, den Leitungskanal 19 umschließen und sich quer zu einer Kanalachse K des Leitungskanals 19 erstrecken.

Gemäß Figur 5 ist ein an der Schäumform 42 anliegender, vom Lenkradskelett 16 und der Skelettabdeckung 18 abgewandter freier Rand 47 des Skelett- bzw. Abdeckungsvorsprungs 36, 38 insbesondere scharfkantig ausgeführt, sodass dieser Rand 47 beim Schließen der Schäumform 42 an einer elastischen Dichtung 44 der Schäumform 42 angreift, insbesondere sogar in diese eingreift, und damit für eine besonders zuverlässige Abdichtung sorgt.

Der Skelettvorsprung 36 und der Abdeckungsvorsprung 38 haben hier beispielhaft eine dreieckige Querschnittsform. Alternativ sind jedoch selbstverständlich auch andere Querschnitte, insbesondere trapezförmige Querschnitte denkbar.

Die Figur 6 zeigt ausschnittsweise eine perspektivische Rückansicht des Lenkradskeletts 16. Dabei wird deutlich, dass das Lenkradskelett 16 im Bereich des Lenkradkranzes 14 einen U-förmigen Querschnitt mit einem Flansch und zwei gegenüberliegenden Schenkeln 48 aufweist, wobei die Schenkel 48 durch mehrere voneinander beabstandete Verstärkungsstege 50 verbunden sind. Darüber hinaus sind auch im Bereich der Skelettfortsätze 24 und Speichen 17 U-förmige oder zumindest konkave Skelettabschnitte 52 vorgesehen.

Ohne Skelettabdeckung wären die Schaumränder 46 beim teilweisen Umschäumen des Lenkradskeletts 16 im Bereich der konkaven Skelettabschnitte 52 vorgesehen (vergleiche Figur 4), was bereits zu einem erhöhten Abdichtungsaufwand führen würde. Besonders problematisch wäre die Abdichtung aufgrund der elektrischen Leitung 34, welche sich ebenfalls durch diesen Bereich erstreckt. Die Schäumform 42 müsste dann zum einen eine zuverlässige Abdichtung gewährleisten und dürfte zum anderen die Leitung 34 nicht beschädigen.

Daher ist es besonders vorteilhaft, auf der dem Flansch gegenüberliegenden Seite des Lenkradskeletts 16 die Skelettabdeckung 18 anzubringen (siehe Figur 2), wobei die Skelettabdeckung 18 von den Verstärkungsstegen 50 beabstandet ist, sodass der Leitungskanal 19 zur Aufnahme der elektrischen Leitung 34 entsteht. Der Leitung 34 erstreckt sich beispielsweise vom Steckverbinder 32 am Montagearm 20 über den Lenkradkranz 14 und die Speiche 17 bis hin zur Nabe 12.

Die Skelettabdeckung 18 deckt folglich die schwierig abzudichtenden, konkaven Skelettabschnitte 52 ab. Ergänzend gewährleistet der durch das Lenkradskelett 16 und die Skelettabdeckung 18 gebildete, umlaufende Wandvorsprung 40 einen einfachen, zuverlässigen und dichten Kontakt mit der Schäumform 42, wodurch insgesamt eine problemlose Umschäumung mit geringem Aufwand möglich ist.

## Patentansprüche

1. Lenkrad für ein Kraftfahrzeug, mit
einer Lenkradachse (A),
einer Nabe (12) zur Befestigung des Lenkrads (10) an einer um die Lenkradachse (A) drehbaren Lenkwelle, sowie
einem Lenkradkranz (14), der ein Lenkradskelett (16) sowie eine Skelettabdeckung (18) aufweist, durch eine Speiche (17) mit der Nabe (12) verbunden ist und die Nabe (12) in Umfangsrichtung zumindest teilweise umgibt,
wobei das Lenkradskelett (16) und die Skelettabdeckung (18) teilweise von einer Umschäumung (39) umschlossen sind und an einem Schaumrand (46) aus der Umschäumung (39) herausragen,
wobei die Umschäumung (39) im Bereich des Schaumrands (46) an einen Skelettvorsprung (36) des Lenkradskeletts (16) und einen Abdeckungsvorsprung (38) der Skelettabdeckung (18) angrenzt,
**dadurch gekennzeichnet, dass** der Skelettvorsprung (36) und der Abdeckungsvorsprung (38) unmittelbar aneinander angrenzen und zusammen einen im Wesentlichen geschlossen umlaufenden Wandvorsprung (40) zur Anlage an einer Schäumform (42) bilden.

2. Lenkrad nach Anspruch 1, **dadurch gekennzeichnet, dass** das Lenkradskelett (16) und die Skelettabdeckung (18) im Bereich der Umschäumung (39) zumindest abschnittsweise Kanalwände eines im Inneren weitgehend schaumfreien Leitungskanals (19) bilden, wobei der Skelettvorsprung (36) und der Abdeckungsvorsprung (38) auf einer Außenseite der Kanalwände angeordnet sind, den Leitungskanal (19) umschließen und sich quer zu einer Kanalachse (K) des Leitungskanals (19) erstrecken.

3. Lenkrad nach einem der vorhergehenden Ansprüche, **dadurch gekennzeichnet, dass** am Lenkradkranz (14) ein Montagearm (20) zur Befestigung einer Bedieneinheit (22) ausgebildet ist, wobei sich der Montagearm (20) vom Lenkradkranz (14) zu einem freien Ende (21) hin erstreckt und der Wandvorsprung (40) den Montagearm (20) zwischen dem Lenkradkranz (14) und dem freien Ende (21) umschließt.

4. Lenkrad nach Anspruch 3, **dadurch gekennzeichnet, dass** im Bereich des Montagearms (20) ein Schaumrand (46) vorgesehen ist und das freie Ende (21) des Montagearms (20) aus der Umschäumung (39) herausragt.

5. Lenkrad nach Anspruch 3 oder 4, **dadurch gekennzeichnet, dass** die Skelettabdeckung (18) einen einstückig angeformten Abdeckungsfortsatz (26) aufweist, welcher zumindest teilweise den Montagearm (20) bildet, wobei der Abdeckungsvorsprung (38) einstückig am Abdeckungsfortsatz (26) angeformt ist.

6. Lenkrad nach einem der vorhergehenden Ansprüche, **dadurch gekennzeichnet, dass** der Wandvorsprung (40) die Speiche (17) zwischen der Nabe (12) und dem Lenkradkranz (14) umschließt.

7. Lenkrad nach einem der vorhergehenden Ansprüche, **dadurch gekennzeichnet, dass** im Bereich der Speiche (17) ein Schaumrand (46) vorgesehen ist und die Speiche (17) nabenseitig aus der Umschäumung (39) herausragt.

8. Lenkrad nach einem der vorhergehenden Ansprüche, **dadurch gekennzeichnet, dass** das Lenkradskelett (16) aus einem Metall oder einer Metalllegierung hergestellt ist.

9. Lenkrad nach einem der vorhergehenden Ansprüche, **dadurch gekennzeichnet, dass** die Skelettabdeckung (18) eine Kunststoff-Abdeckung ist.

## Claims

1. A steering wheel for an automotive vehicle comprising
a steering wheel axis (A),
a hub (12) for fastening the steering wheel (10) on a steering shaft rotatable about the steering wheel axis (A), and
a steering wheel rim (14) including a steering wheel skeleton (16) as well as a skeleton cover (18), being connected to the hub (12) via a spoke (17) and surrounding the hub (12) at least partially in the circumferential direction,
wherein the steering wheel skeleton (16) and the skeleton cover (18) are partially surrounded by a foam coating (39) and protrude from the foam coating (39) at a foamed edge (46),
wherein the foam coating (39) is adjacent to a skeleton projection (36) of the steering wheel skeleton (16) and to a cover projection (38) of the skeleton cover (18) in the area of the foamed edge (46),
**characterized in that** the skeleton projection (36) and the cover projection (38) are directly adjacent to each other and together form a substantially circumferentially closed wall projection (40) for contacting a foaming mold (42).

2. The steering wheel according to claim 1, **characterized in that** the steering wheel skeleton (16) and the skeleton cover (18) in the area of the foam coating (39) at least in portions form passage walls of a line passage (19) largely foam-free in the interior, the skeleton projection (36) and the cover projection (38) being arranged on an outside of the passage walls, enclosing the line passage (19) and extending transversely to a passage axis (K) of the line passage (19).

3. The steering wheel according to any one of the preceding claims, **characterized in that** a mounting arm (20) for fastening an operating unit (22) is configured at the steering wheel rim (14), wherein the mounting arm (20) extends from the steering wheel rim (14) toward a free end (21) and the wall projection (40) encloses the mounting arm (20) between the steering wheel rim (14) and the free end (21).

4. The steering wheel according to claim 3, **characterized in that** a foamed edge (46) is provided in the area of the mounting arm (20) and the free end (21) of the mounting arm (20) protrudes from the foam coating (39).

5. The steering wheel according to claim 3 or 4, **characterized in that** the skeleton cover (18) includes an integrally formed cover extension (26) which at least partially forms the mounting arm (20), the cover projection (38) being formed integrally with the cover extension (26).

6. The steering wheel according to any one of the preceding claims, **characterized in that** the wall projection (40) encloses the spoke (17) between the hub (12) and the steering wheel rim (14).

7. The steering wheel according to any one of the preceding claims, **characterized in that** a foamed edge (46) is provided in the area of the spoke (17) and the spoke (17) protrudes from the foam coating (39) on the hub side.

8. The steering wheel according to any one of the preceding claims, **characterized in that** the steering wheel skeleton (16) is made from metal or a metal alloy.

9. The steering wheel according to any one of the preceding claims, **characterized in that** the skeleton cover (18) is a plastic cover.

## Revendications

1. Volant d'un véhicule automobile, possédant
un axe de volant (A),
un moyeu (12) pour fixer le volant (10) à un arbre de direction tournant autour de l'axe du volant (A), ainsi qu'
une jante de volant (14), qui comporte une armature de volant (16) et un revêtement de l'armature (18), qui est reliée au moyeu (12) par un branche (17) et entoure au moins partiellement le moyeu (12) dans la direction circonférentielle,
pour lequel l'armature du volant (16) et le revêtement de l'armature (18) sont partiellement entourés d'une enveloppe en mousse (39) et ressortent de l'enveloppe en mousse (39) au niveau d'un bord de la mousse (46),
pour lequel le revêtement en mousse (39) dans la région du bord de la mousse (46) est contigu à une saillie de l'armature (36) de l'armature du volant (16) et à une saillie de revêtement (38) du revêtement de l'armature (18),
**caractérisé en ce que** la saillie de l'armature (36) et la saillie du revêtement (38) sont directement adjacentes l'une à l'autre et forment ensemble une saillie de paroi circonférentielle sensiblement fermée (40) destinée à venir en butée contre une forme en mousse (42).

2. Volant de direction selon la revendication 1, **caractérisé en ce que** l'armature de volant (16) et le revêtement de l'armature (18) forment, dans la zone de l'enveloppe en mousse (39), au moins par sections, des parois de canal d'un conduit (19) qui est largement exempt de mousse à l'intérieur, pour lequel la saillie de l'armature (36) et la saillie du revêtement (38) sont disposées sur un côté extérieur des parois de canal, entourant le conduit (19) et s'étendant transversalement par rapport à un axe de canal (K) du conduit (19).

3. Volant de direction selon l'une des revendications précédentes, **caractérisé en ce qu'**un bras de montage (20) est formé sur la jante du volant (14) pour la fixation d'une unité de commande (22), pour lequel le bras de montage (20) s'étend depuis la jante du volant (14) vers une extrémité libre (21) et la saillie de paroi (40) enferme le bras de montage (20) entre la jante du volant (14) et l'extrémité libre (21).

4. Volant selon la revendication 3, **caractérisé en ce qu'**un bord en mousse (46) est prévu dans la zone du bras de montage (20) et que l'extrémité libre (21) du bras de montage (20) dépasse de l'entourage en mousse (39).

5. Volant de direction selon la revendication 3 ou 4, **caractérisé en ce que** le revêtement de l'armature (18) comprend une extension de revêtement (26) formée d'un seul tenant, laquelle forme au moins partiellement le bras de montage (20), la saillie de revêtement (38) étant formée d'un seul tenant sur l'extension de revêtement (26).

6. Volant de direction selon l'une des revendications précédentes, **caractérisé en ce que** la saillie de la paroi (40) enferme la branche (17) entre le moyeu (12) et la jante du volant (14).

7. Volant de direction selon l'une des revendications précédentes, **caractérisé en ce qu'**un bord en mousse (46) est prévu dans la zone d'une branche (17) et que la branche (17) du côté du moyeu dépasse de l'enveloppe en mousse (39).

8. Volant selon l'une des revendications précédentes, **caractérisé en ce que** l'armature du volant (16) est fabriquée à partir d'un métal ou d'un alliage métallique.

9. Volant selon l'une des revendications précédentes, **caractérisé en ce que** le revêtement de l'armature (18) est un revêtement en plastique.
